**Europäisches Patentamt**

**European Patent Office**

**Office européen des brevets**

(19)

(11) Veröffentlichungsnummer: **0 157 274**
A2

(12) # EUROPÄISCHE PATENTANMELDUNG

(21) Anmeldenummer: **85103127.8**

(22) Anmeldetag: **18.03.85**

(51) Int. Cl.⁴: $G 09 G$ **1/02**, $G 06 K$ **9/56**

(30) Priorität: **19.03.84 US 591283**

(43) Veröffentlichungstag der Anmeldung: **09.10.85**
**Patentblatt 85/41**

(84) Benannte Vertragsstaaten: **AT BE CH DE FR GB IT LI**

(71) Anmelder: **Siemens Aktiengesellschaft, Berlin und München Wittelsbacherplatz 2, D-8000 München 2 (DE)**

(72) Erfinder: **Tsikos, Constantine J., 5316 King Avenue, Pennsauken New Jersey 08109 (US)**

(54) **Verfahren und Anordnung zum Speichern und Abrufen von binären Daten für eine binäre bildliche Darstellung.**

(57) Verfahren und Vorrichtung zum schnellen Abfragen von Bildelementdaten für einen z.B. aus 3×3 Bildelementen bestehenden Teilbereich einer aus N×N Bildelementen bestehenden binären bildlichen Darstellung, insbesondere zum Zwecke einer Bildmustererkennung. Zur Erzielung einer schnellen Datenabfrage mit einem Minimum an Speicherzugriffsoperationen werden die binären Daten für N×N Bildelemente eines Bildmusters gleichzeitig in eine Vielzahl von gleichartigen $N^2 \times 1$-Bit-Schreib-/-Lesespeichern (12) eingeschrieben. Die Bildelementdaten für einen Teilbereich, z.B. für ein 3×3 Bildelement-Fenster werden in einem Leseschritt aus den Schreib-/Lesespeichern (12) ausgelesen, wobei nur eine einzige Adresse P(x, y) des zentralen Bildelements dieses Teilbereichs zugeführt werden muß. Während der Leseoperation wird die Adresse P(x, y) über einen Adressenbus (14) einer Vielzahl von Adressen-Variationseinrichtungen (10) mitgeteilt, die den Schreib/Lesespeichern (12) zugeordnet sind. Bei einem 3×3 Bildelement-Fenster leiten die Adressen-Variationseinrichtungen (10) jeweils die Adressen aller acht Bildelemente ab, die dem zentralen Bildelement benachbart sind. Hierdurch werden die Daten, die in den entsprechenden Speicherplätzen der Schreib/Lesespeicher gespeichert sind, auf die Datenleitungen eines Datenbus (16) ausgegeben. Die Daten aller Bildelemente des Teilbereichs werden somit durch eine einzige Leseoperation erhalten.

ACTORUM AG

0157274

Siemens Aktiengesellschaft
Berlin und München

Unser Zeichen
VPA 84 P 7412.E

Verfahren und Anordnung zum Speichern und Abrufen von
binären Daten für eine binäre bildliche Darstellung

Die Erfindung bezieht sich auf ein Verfahren zum Speichern und Abrufen von binären Daten für eine binäre bildliche Darstellung nach dem Oberbegriff des Anspruchs 1 sowie auf eine Anordnung zur Durchführung des Verfahrens.

Geht man von einer aus N x N Bildelementen bestehenden binären bildlichen Darstellung aus, so werden zur Speicherung der die Darstellung definierenden binären Daten Speicherplätze für $N^2$ Bits benötigt. Da aber Mikrocomputer im allgemeinen nach Bytes oder sog. Nibbles organisiert sind, ergeben sich oftmals nicht mehr zu tolerierende Bearbeitungszeiten für die Speicherung und das Abrufen solcher Daten, die irgendeiner Operation unterzogen werden sollen.

Der Erfindung liegt die Aufgabe zugrunde, ein Verfahren der eingangs genannten Art anzugeben, das eine möglichst schnelle Abfrage der Daten für ein interessierendes Bildmuster innerhalb eines definierten Teilbereichs einer binären bildlichen Darstellung ermöglicht. Das wird durch eine Ausbildung des Verfahrens nach dem kennzeichnenden Teil des Anspruchs 1 erreicht.

Der mit der Erfindung erzielbare Vorteil liegt insbesondere darin, daß es durch einen vergrößerten Einsatz von Speicherkapazität gelingt, die Anzahl der Speicherzugriffsoperationen, die notwendig sind, um die Daten für
St 1 Sti/12.03.1985 ein interessierendes Bildmuster innerhalb eines definierten Teilbereichs abzufragen, auf ein Minimum zu
reduzieren.

Die Ansprüche 2 und 3 sind auf bevorzugte Ausgestaltungen des Verfahrens nach der Erfindung gerichtet, während
die Ansprüche 4 bis 8 eine bevorzugte Anordnung zur
Durchführung des Verfahrens nach den Ansprüchen 1 bis 3
sowie bevorzugte Ausgestaltungen und Weiterbildungen
dieser Anordnung betreffen.

Die Erfindung wird nachfolgend anhand der Zeichnung
näher erläutert. Dabei zeigt:

Fig. 1 die schematische Darstellung einer Anordnung zur
        Durchführung des Verfahrens nach der Erfindung,
Fig. 2 einen aus 3 x 3 Bildelementen bestehenden Teilbereich einer binären bildlichen Darstellung, bei
        dem die acht äußeren Bildelemente als Funktionen
        des Ortes des zentralen Bildelements angedeutet
        sind, und
Fig. 3 typische Bildmuster innerhalb eines Teilbereichs
        der bildlichen Darstellung, die mit einer zur
        Durchführung des erfindungsgemäßen Verfahrens
        dienenden Anordnung erkannt werden können.

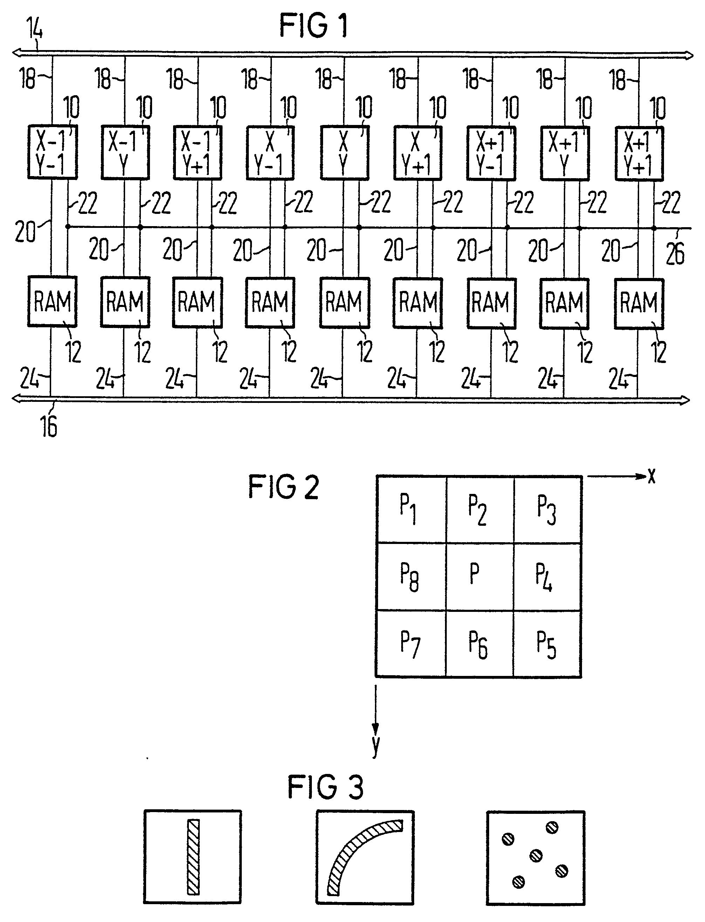

In Fig. 1 sind eine Reihe von Adressen-Variationseinrichtungen 10, Schreib-Lesespeicher 12 sowie ein Adressenbus 14 und ein Datenbus 16 dargestellt. Der Adressenbus 14 ist über mehradrige Verbindungsleitungen 18 mit
jeder Adressen-Variationseinheit 20 verbunden. Leitungen
20 verbinden die Adressen-Variationseinheiten und die
Schreib-Lesespeicher miteinander. Weiterhin verbinden
Leitungen 24 die Schreib-Lesespeicher mit dem Datenbus
16.

Das in Fig. 1 dargestellte Ausführungsbeispiel einer Anordung zur Durchführung des erfindungsgemäßen Verfahrens weist neun Adressen-Variationseinrichtungen und neun Schreib-Lesespeicher auf. Daher kann es dazu benutzt werden, um schnell die Daten für einen aus 3 x 3 Bildelementen bestehenden Teilbereich einer größeren binären bildlichen Darstellung abzurufen. Es ist ebenso möglich, die Daten von Teilbereichen unterschiedlicher Größen dadurch abzufragen, daß die Anzahl der Adressen-Variationseinrichtungen und Schreib-Lesespeicher variiert wird. Aus Gründen einer einfachen Darstellung der Erfindung behandelt die nachfolgende Beschreibung jedoch nur den Fall eines 3 x 3 Teilbereichs.

Zur Erläuterung des erfindungsgemäßen Verfahrens kann davon ausgegangen werden, daß zunächst die Adressen-Variationseinrichtungen 10 unwirksam geschaltet und die binären Daten, die eine aus N x N Bildelementen bestehende binäre bildliche Darstellung beschreiben, in jeden der Schreib-Lesespeicher 12 von Fig. 1 eingeschrieben oder eingespeichert werden. Vor dem Lesen desjenigen Teiles der gespeicherten Daten, der zu einem bestimmten, aus 3 x 3 Bildelementen bestehenden Teilbereich gehört, werden die Adressen-Variationseinrichtungen 10 wirksam geschaltet. Eine Schreib/Lese-Kontrolleitung 26, die mit Leitungen 22 verbunden ist, steuert die Wirksamschaltung und Unwirksamschaltung der Adressen-Variationseinrichtungen in Abhängigkeit davon, ob sich die Anordnung im Betriebszustand des Einschreibens oder des Auslesens befindet.

Die Adressen-Variationseinrichtungen 10 sind einfache arithmetische Schaltungen, die jeweils zur Bearbeitung sowohl der Zeilenadresse als auch der Spaltenadresse eines bestimmten Bildelementes dienen. Nach einer bevorzugten Ausbildung kann jede Adressen-Variationseinrichtung aus zwei in Kaskade geschalteten, synchron betriebenen, binären Vorwärts-Rückwärtszählern bestehen, die die Zeilen- und Spaltenadressen zueinander benachbarter Bildelemente erzeugen.

Wie in Fig. 2 angedeutet, werden bei einem zentralen Bildelement $P(x,y)$, dessen Ort durch die Koordinaten $x$ und $y$ eines karthesischen Koordinatensystems definiert ist, die Orte der angrenzenden Bildelemente $P_1$ bis $P_8$ mittels der Adressen-Variationseinrichtungen wie folgt abgeleitet:

$$P_1 = P(x-1, y-1)$$
$$P_2 = P(x, y-1)$$
$$P_3 = P(x+1, y-1)$$
$$P_4 = P(x+1, y)$$
$$P_5 = P(x+1, y+1)$$
$$P_6 = P(x, y+1)$$
$$P_7 = P(x-1, y+1)$$
$$P_8 = P(x-1, y).$$

Um einen bestimmten aus 3 x 3 Bildelementen bestehenden Teilbereich zu untersuchen, wird die Adresse $P(x, y)$ seines zentralen Bildelements über den Adressenbus 14 jeder der Adressen-Variationseinrichtungen 10 zugeführt. Die Adressen-Variationseinrichtungen 10 leiten daraufhin jeweils die Adressen für die anderen Bildelemente $P_1$ bis $P_8$ des Teilbereichs ab. Jede dieser Adressen wird einem zugeordneten Schreib-Lesespeicher 12 zugeführt, der das unter der Adresse abgespeicherte Datum auf den Datenbus 14 ausgibt.

Die Erfindung benutzt überschüssige oder nicht benötigte Speicherkapazitäten, um Daten von Bildelementen zu speichern, die der von einem Computer übermittelten Bildelement-Adresse benachbart sind. Hierdurch ist es möglich, über den Computer nur ein einziges Bildelement P(x, y) zu adressieren, das im Zentrum des aus 3 x 3 Bildelementen bestehenden Teilbereichs liegt, und dennoch die Daten aller neun Bildelemente des Teilbereichs ausgelesen zu bekommen. Die Erfindung beseitigt also die Notwendigkeit neun Speicheradressen zu übermitteln, um sämtliche Daten für die neun Bildelemente des Teilbereichs auszulesen.

Obwohl die Speicherarchitektur, die nach der Erfindung benutzt wird, redundant ist, erlaubt die herangezogene Speicherkapazität eine sehr schnelle Abfrage von Daten, weil nur eine einzige Speicheradresse gebraucht wird, um sämtliche Daten für den zu untersuchenden Teilbereich zu erhalten. Eine Ausgestaltung der zur Durchführung des erfindungsgemäßen Verfahrens dienenden Anordnung sieht vor, daß die Schreib-Lesespeicher 12 eine Arbeitsbreite von 1 Bit aufweisen, also z.B. als 65k x 1 Bit-Speicher oder 16k x 1 Bit-Speicher organisiert sind.

Nach einer anderen Ausgestaltung werden (in der Zeichnung nicht dargestellte) programmierbare Adressen-Variationseinrichtungen anstelle der Einrichtungen 10 verwendet. Damit kann die Erfindung insbesondere auf dem Gebiet der Bildverarbeitung und Bildmustererkennung benutzt werden. Bildmuster etwa nach Fig. 3 können aus einem Speicher mit einem einzigen Lesebefehl, durch den ein einziges Bildelement adressiert wird, ausgelesen werden.

8 Patentansprüche
3 Figuren

0157274

Patentansprüche

1. Verfahren zum Speichern und Abrufen von binären Daten für einen Teilbereich einer binären bildlichen Darstellung, dadurch gekennzeichnet, daß die binären Daten aller Bildelemente der bildlichen Darstellung gleichzeitig in eine Vielzahl von Schreib-Lesespeichern (12) eingeschrieben werden, daß die Adresse eines zentralen Bildelements (P) des Teilbereichs einer Vielzahl von Variationseinrichtungen (10) zugeführt wird, von denen jede einem der Schreib-Lesespeicher (12) zugeordnet ist, daß in den Variationseinrichtungen (10) die Adressen der Bildelemente ($P_1$ ... $P_8$) des Teilbereichs aus der Adresse des zentralen Bildelements (P) abgeleitet werden und daß aus den Schreib-Lesespeichern (12) die unter den jeweils abgeleiteten Adressen gespeicherten Daten ausgelesen werden, so daß die Daten aller Bildelemente des Teilbereichs im Verlaufe einer einzigen Leseoperation erhalten werden.

2. Verfahren nach Anspruch 1, dadurch gekennzeichnet, daß die binären Daten von N x N Bildelementen der bildlichen Darstellung gleichzeitig in $M^2$ Schreib-Lesespeicher (12) eingeschrieben werden, wobei N eine ganze Zahl und M eine ungerade ganze Zahl bedeuten und M kleiner ist als N, und daß $M^2$ Variationseinrichtungen (10) vorgesehen sind.

3. Verfahren nach Anspruch 2, dadurch gekennzeichnet, daß M = 3.

4. Anordnung zur Durchführung des Verfahrens nach einem der Ansprüche 1 bis 3, gekennzeichnet durch Vorrichtungen zum gleichzeitigen Einschreiben der binären Daten aller Bildelemente der bildlichen

0157274

Darstellung in eine Vielzahl von Schreib-Lesespeicher (12), Vorrichtungen zum Zuführen der Adresse eines zentralen Bildelements (P) des Teilbereichs zu einer Vielzahl von Variationseinrichtungen (10), Vorrichtungen zum Zuliefern der in den Variationseinrichtungen (10) abgeleiteten Adressen zu den entsprechenden Schreib-Lesespeichern (12) und Vorrichtungen zum Auslesen der unter den abgeleiteten Adressen und unter der Adresse des zentralen Bildelements (P) gespeicherten binären Daten.

5. Vorrichtung nach Anspruch 4, d a d u r c h   g e - k e n n z e i c h n e t ,  daß eine Variationseinrichtung (10) aus einer adressenarithmetischen Schaltung besteht, die zwei binäre Vorwärts-Rückwärtszähler zur Erzeugung der Zeilen- und Spaltenadressen zueinander benachbarter Bildelemente enthält.

6. Vorrichtung nach Anspruch 5, d a d u r c h   g e - k e n n z e i c h n e t ,  daß die adressenarithmetische Schaltung programmierbar ausgebildet ist.

7. Anordnung nach Anspruch 4, d a d u r c h   g e - k e n n z e i c h n e t ,  daß die binäre bildliche Darstellung aus N x N Bildelementen (N...ganze Zahl) besteht.

8. Anordnung nach Anspruch 7, d a d u r c h   g e - k e n n z e i c h n e t ,  daß neun Schreib-Lesespeicher (12) vorgesehen sind, daß der Teilbereich der bildlichen Darstellung aus 3 x 3 Bildelementen besteht und daß die Schreib-Lesespeicher (12) als $N^2$ x 1 Bit-Speicher organisiert sind.

0157274

1/1

FIG 1

FIG 2

FIG 3